(19)

Europäisches
Patentamt

European
Patent Office

Office européen
des brevets

(11)  **EP 2 562 694 A1**

(12)  **EUROPEAN PATENT APPLICATION**

(43) Date of publication:
    **27.02.2013 Bulletin 2013/09**

(21) Application number: **11178314.8**

(22) Date of filing: **22.08.2011**

(51) Int Cl.:
    ***G06N 99/00*** (2010.01)    *H01L 31/00* (2006.01)

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(71) Applicant: **Hitachi Ltd.**
    **Tokyo (JP)**

(72) Inventor: **Ferrus, Thierry**
    **Cambridge, Cambridgeshire CB3 0HE (GB)**

(74) Representative: **Piotrowicz, Pawel Jan Andrzej et
    al**
    **Venner Shipley LLP**
    **Byron House**
    **Cambridge Business Park**
    **Cowley Road**
    **Cambridge CB4 0WZ (GB)**

(54)  **Quantum information processing**

(57)    A method is described which comprises applying a set of microwave pulse(s) (17) to a quantum information processing device (2) comprising at least one qubit formed in a semiconductor region (4). The microwave pulse(s) has (have) a frequency of between 5 GHz and 20 GHz, preferably between 5 and 15 GHz.

Fig. 1

**Description**

The present invention relates to quantum information processing.

Quantum information processing devices use quantum mechanical effects to store and process information in the form of quantum bits or "qubits".

B. E. Kane: "A silicon-based nuclear spin quantum computer", Nature, volume 393, pages 133 to 137 (1998) describes a scheme for implementing a quantum computer on an array of nuclear spins located on donors in silicon.

The proposed quantum computer comprises an array of shallow-level donors positioned beneath the surface in a semiconductor. A first set of gates are located above the donors which control the strength of hyperfine interactions and, thus, the resonance frequency of nuclear spins. A second set of gates are located between donors which turn on and off electron-mediated coupling between the nuclear spins. A globally-applied ac magnetic field is used to flip nuclear spins at resonance. By adjusting coupling of each spin to its neighbours and to the magnetic field, different operations can be performed on each of the spins simultaneously. Measurements are performed by transferring nuclear spin polarization to the electrons and determining the electron spin state by its effect on the orbital wavefunction of the electrons, which can be probed using capacitance measurements between adjacent gates.

The proposed quantum computer is based on a semiconductor which exhibits zero nuclear spin, such as silicon. However, this rules out the use of some semiconductors, such as gallium arsenide and other III—V semiconductors, as a host material for a quantum computer based on nuclear spin.

G. Morley: "The initialization and manipulation of quantum information stored in silicon by bismuth dopants", Nature Materials, volume 9, page 725 (2010) describes demonstration of the scheme employing a heavier impurity in silicon and which employs preparing quantum states and nuclear spin manipulations using pulsed electron-nuclear double resonance.

A qubit can be defined in a semiconductor device in other ways.

An isolated double quantum dot may be used to provide a charge qubit which can be initialized and manipulated using capacitively-coupled gates and measured using a capacitively coupled single-electron transistor, as described in J. Gorman et al.:"Charge-Qubit Operation of an Isolated Double Quantum Dot", Physical Review Letters, volume 95, page 090502 (2005).

Although III—V semiconductors are not suitable for quantum computers based on nuclear spin, they can be used to make devices based on electron spin and R-B Liu, et al.: "Quantum computing by optical control of electron spins", Advances in Physics, volume 59, pages 703 to 802 (2010) provides a review of large-scale quantum computing by optical control of electron spins in quantum dots.

Although optical control of qubits has the advantage that it can allow qubits to be isolated more easily from external sources of decoherence, optical control tends to employ large and/or costly equipment. Moreover, optical control suffers the drawback that it can be more difficult to address qubits which are spaced apart.

Using gate electrodes to control qubits electrically allows spaced-apart qubits to be individually addressed. However, gate electrodes allow noise from external circuitry and other sources to propagate easily directly into the device. Furthermore, gate electrodes should ideally be impedance matched to avoid reflection and attenuation, although can be difficult to realise in practice at a nanometre scale.

The present invention seeks to provide an improved method of controlling a semiconductor-based quantum information processing device.

According to a first aspect of the present invention there is provided a method comprising applying a set of microwave pulses to a quantum information processing device comprising at least one qubit formed in a semiconductor region, the microwave pulse(s) having a frequency of between 5 GHz and 20 GHz.

Thus, the microwave pulse(s) can provide leadless control of the at least one qubit.

The microwave pulse(s) may have a frequency of between 10 GHz and 15 GHz.

The semiconductor region may comprise silicon. The semiconductor region may be monocrystalline.

The quantum information processing device may further comprise at least one gate comprising a semiconductor material, such as silicon. The at least one gate may be monocrystalline or polycrystalline. The at least one gate may be doped n-type or p-type. The at least one gate may be doped with an impurity to a concentration of at least $3\times10^{18}$ cm$^3$ or at least $1\times10^{19}$ cm$^3$.

The gate electrode may have an edge, a core region and an edge region disposed between the core region and the edge and the concentration of impurities across the edge region may have a non-zero gradient. The gradient may be at least (i.e. greater than or equal to) $10^{10}$ cm$^{-2}$. The gradient may be no more than (i.e. less than or equal to) $10^{12}$ cm$^{-2}$.

The set of microwave pulses may comprise a single pulse. The or each pulse may have a duration between about 10 ns and 100 $\mu$s.

The method may comprise applying a first set of microwave pulses having a first frequency in a range between 5 and 20 GHz, optionally between 10 GHz and 15 GHz, and applying a second set of microwave pulses having a second, different frequency in a range between 5 and 20 GHz, optionally between 10 GHz and 15 GHz.

The first and second sets of microwave pulses may be applied at different times and/or at the same time (i.e. the sets of pulses can overlap or overlap for a given duration less than the duration of the set of the set of pulses).

According to a third aspect of the present invention there is provided a method of applying a set of microwave pulses to a device comprising at least one gate electrode which comprises semiconductor material, the at least one gate electrode not having a wired connection to external circuitry, the microwave pulse having a frequency of between 5 GHz and 20 GHz. The semiconductor material may comprise silicon.

Thus, the microwave pulse(s) can provide leadless control of a semiconductor device.

The microwave pulse(s) may have a frequency of between 10 GHz and 15 GHz.

The at least one gate may be monocrystalline or polycrystalline. The at least one gate may be doped n-type or p-type. The at least one gate may be doped with an impurity to a concentration of at least $3 \times 10^{18}$ cm$^3$ or at least $1 \times 10^{19}$ cm$^3$. The gate electrode may have an edge, a core region and an edge region disposed between the core region and the edge and the concentration of impurities across the edge region may have a non-zero gradient. The gradient may be at least (i.e. greater than or equal to) $10^{10}$ cm$^{-2}$. The gradient may be no more than (i.e. less than or equal to) $10^{12}$ cm$^{-2}$. The set of microwave pulses may comprise a single pulse. The or each pulse may have a duration between about 10 ns and 100 $\mu$s.

According to a fourth aspect of the present invention there is provided apparatus for performing the method.

Certain embodiments of the present invention will now be described, by way of example, with reference to the accompanying drawings, in which:

Figure 1 is a schematic diagram of a system including a quantum information processing device, a microwave source for controlling the device and other control and measurement circuitry;
Figure 2 illustrates a first type of microwave emitter;
Figure 3 illustrates a second type of microwave emitter;
Figure 4 is a plan view of a quantum information processing device;
Figure 4a is cross-section view of the device shown in Figure 4 taken along the line A-A';
Figure 5 illustrates an effect of microwave radiation on a double dot system;
Figure 6 illustrates a potential drop between a core region of a gate electrode and an edge region of the gate electrode; Figure 7;
Figure 8 illustrates a part of a quantum information processing device having more than one qubit; and
Figure 9 is a process flow diagram of a method of addressing different qubits.

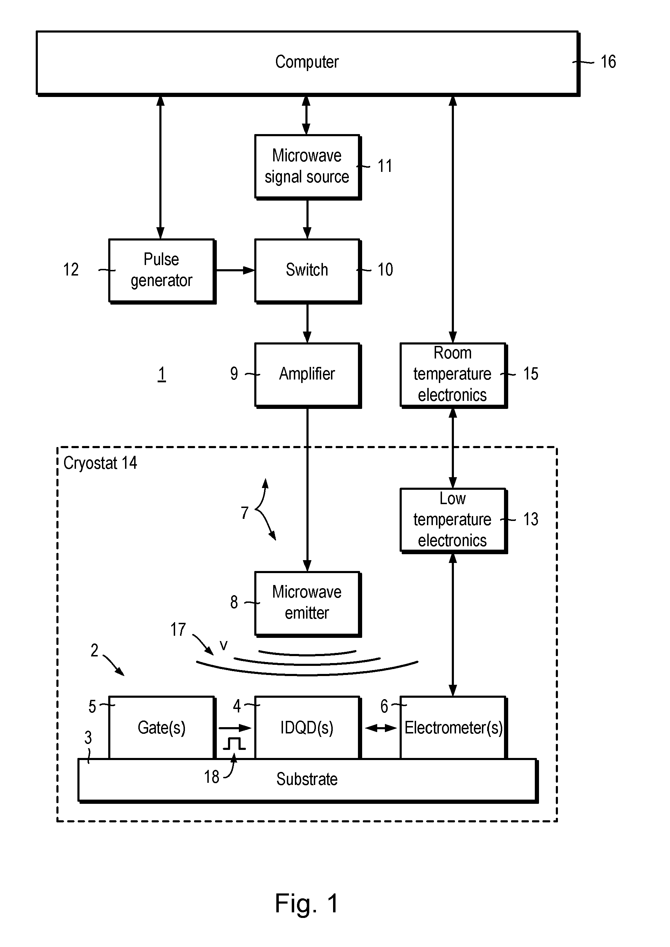

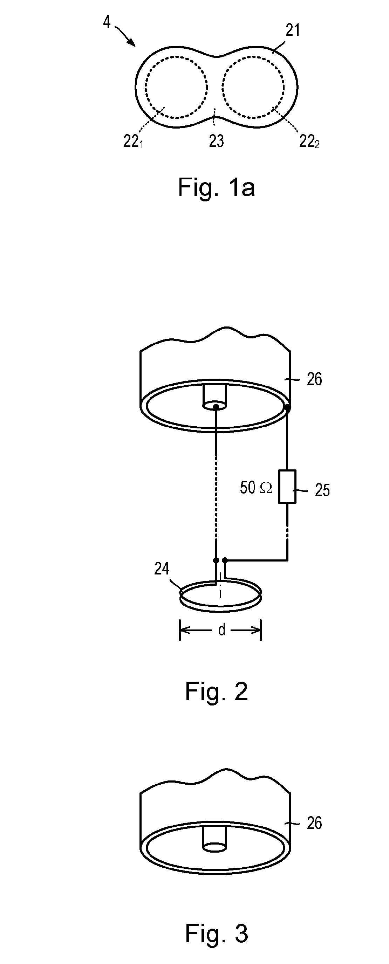

Referring to Figures 1, a quantum information processing system 1 is shown.

The system 1 includes a semiconductor-based quantum information processing device 2 comprising a substrate 3, at least one isolated quantum dot system 4, at least one gate 5 and at least one electrometer 6. In this example, the isolated quantum dot system 4 is a double quantum dot system and is used to define a charge qubit.

The isolated double quantum dots(s) 4 are controlled by a microwave control system 7 which includes a microwave emitter 8, an amplifier 9, a switch 10, a microwave signal source 11 and pulse generator 12.

The switch 10 can take the form of a Herotek single-pole, single-throw PIN switch model number S1D0518A3. The microwave signal source 11 can take the form of an Agilent E8257D-520 PSG analogue signal generator and the pulse generator 12 can take the form of Agilent B1130A pulse pattern generator.

The electrometer(s) 6 are connected to low-temperature control and measurement module 13 which includes, among other things, filters (not shown) and circuits (not shown). In some embodiments, some gates 5 may be connected to the low-temperature control and measurement module 13.

As shown in Figure 1, the quantum information processing device 2, microwave emitter 8 and low-temperature control and measurement module 13 are housed in a refrigerator or cryostat 14 held at a temperature of 4.2 K or lower. The quantum information processing device 2 may be cooled to an even lower temperature, for example, below 1.2 K. The low-temperature electronics module 13 is connected to room temperature control and measurement module 15.

The temperature of operation of the device 2 may be higher, for example 77 K or even 300 K, and so avoid the need for a low-temperature refrigerator. For example, S. J. Shin et al.: "Room-Temperature Charge Stability Modulated by Quantum Effects in a Nanoscale Silicon Island", Nano Letters, volume 11, pages 1591 to 1597 (2011) describes Coulomb blockade devices operating at room temperature.

A computer 16 controls the operation of the microwave signal source 11 and pulse generator 12 and room temperature control and measurement module 15.

As will be explained in more detail later, the microwave control system 7 is used to generate pulses 17 of microwave radiation which can be used to control the isolated double quantum dot system(s) 4 directly by promoting inter-dot tunnelling and indirectly by generating electric field pulses 18 using the gate(s) 5.

Further details about the control and measurement system can be found in T. Ferrus et al.: "Cryogenic instrumentation for fast current measurement in a silicon single electron transistor", Journal Of Applied Physics, volume 106, page 033705 (2009) and in T. Ferrus et al.: "Electron dynamics in a non-metallic silicon isolated double quantum dot capacitively coupled to a single electron transistor", arXiv:0907.2635 (2011) which are incorporated herein by reference.

Referring also to Figure 1a, the isolated double quantum dot system 4 can be defined by a region of monocrystalline or polycrystalline silicon 21 which defines first and second quantum dots $22_1$, $22_1$ separated by a barrier region 23 formed by depletion. In some embodiments, the barrier region 23 can be formed by a region of dielectric material, such as silicon dioxide.

Referring to Figures 2 and 3, the microwave emitter 8 can take the form of a coil 24 connected in series to a 50 Ω resistor 25 to a co-axial cable 26 or simply endless co-axial waveguide 26 or endless flange (not shown) connected to the co-axial cable 26. The resistor 25 can take the form of a metal thin-film resistor or other type of resistor which maintains its resistance value across a wide temperature range.

The coil 24 can take the form of a two-turn coil having a diameter, d, of a few millimetres. A coil 24 can be used to control the device 1 through magnetic coupling and an endless co-axial waveguide 26 can be used to control the device 2 through electric coupling. In some embodiments, more than two-turns can be used.

The microwave control system 7 is arranged to control the quantum information processing device 2 using microwave radiation having a frequency, ν, in the range of about 1 to 40 GHz. Preferably, the microwave radiation has a frequency, ν, in the range of about 5 to 20 GHz. More preferably, the microwave radiation has a frequency, ν, in the range of about 10 to 15 GHz. Without wishing to be bound by a particular theory, it is thought that spatial Rabi oscillations involving $P_{b1}$ defect centres mask measurement of the isolated double quantum dot system 4 for frequencies below about 10 GHz and that significant attenuation occurs for frequencies above about 15 GHz.

The microwave control system 7 is configured to transmit microwaves in pulses having a pulse width, Δt, lying in a range of between about 10 ns to 100 μs.

The gates 5 or at least some of the gates 5 are not directly connected by a wired link or lead to control and measurement electronics 13, 15. This can help to reduce noise. Notwithstanding this, the gates 5 can be used to apply a dc electric field pulse 18 by converting and rectifying the ac microwave pulse 17.

Thus, a signal in the microwave range can be broadcast globally without direct connection to the device 2, thereby reducing the noise level and so avoid the need for impedance matching for leads.

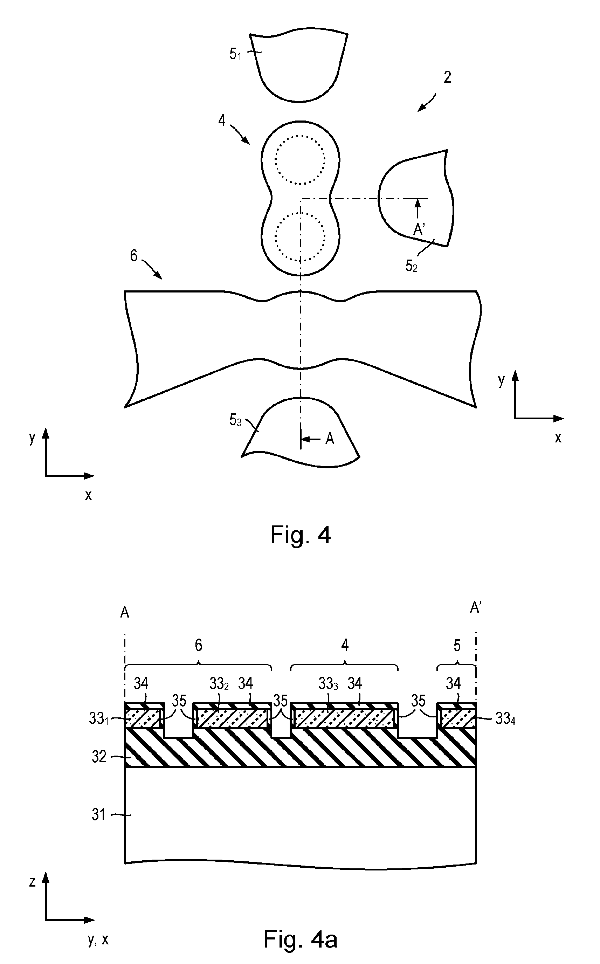

Referring to Figures 4 and 4a, an example of a quantum information processing device 2 is shown.

The quantum information processing device 2 includes a single isolated double quantum dot system 4 capacitively coupled to an electrometer 6 which is in the form of a single-electron transistor. The device 2 also includes first, second and third side gates $5_1$, $5_2$, $5_3$ for controlling operation of the isolated quantum dot system 4 and the electrometer 6.

As shown in Figure 4a, the device 2 is formed on a silicon substrate 31 having an buried silicon dioxide layer 32, regions $33_1$, $33_2$, $33_3$, $33_4$ of phosphorus-doped silicon formed by trench isolation, silicon dioxide surface regions 33 and silicon dioxide sidewall regions 34.

The device 2 is the same as that described in T. Ferrus *et al.:* "Electron dynamics in a non-metallic silicon isolated double quantum dot capacitively coupled to a single electron transistor", arXiv:0907.2635 (2011) ibid. which is incorporated herein by reference.

Without wishing to be bound by any particular theory, microwave control of the device 2 is considered to occur through two mechanisms.

*Direct charge pumping*

Microwave radiation can modify tunnelling rate of an electron across the tunnel barrier 23 separating the first and second quantum dots $22_1$, $22_2$.

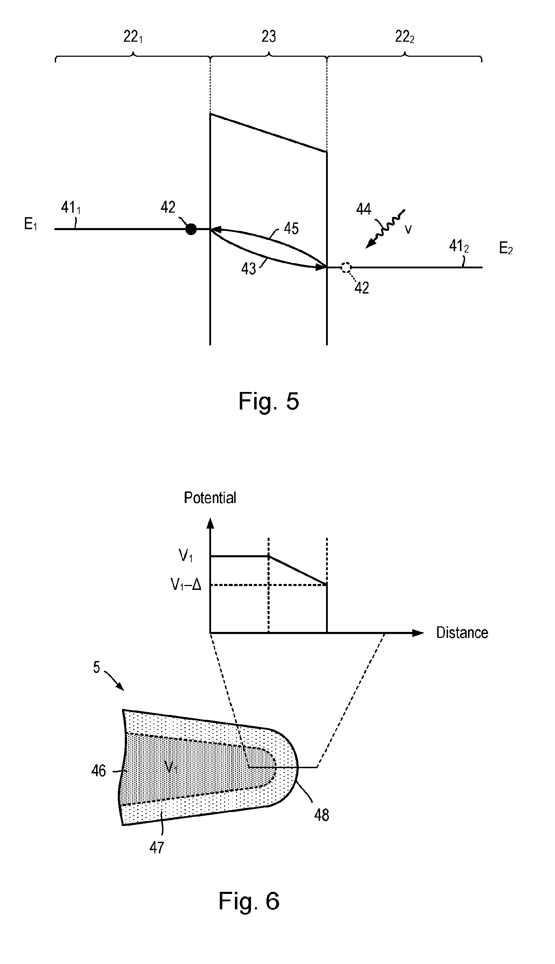

Figure 5 shows the tunnel barrier 23 between first and second quantum dots $22_1$, $22_2$ having first and second highest energy levels $41_1$, $41_2$ respectively.

Application of a bias to a gate or an inherent charge imbalance can cause a potential difference to appear between the two energy levels $41_1$, $41_2$, i.e. $E_1 > E_2$. As shown in Figure 5, an electron 42 can tunnel from a (highest) occupied state $41_1$ in the first dot $22_1$ into a (highest) unoccupied state $41_2$ in the second dot $22_2$ in a first process 43.

Microwave photon(s) 44 can be used to pump the electron 42 in the opposite direction to the current flow resulting from the potential difference in a second process 45. The tunnelling rate in the presence of microwave radiation $\Gamma^*(E)$ is approximately:

$$\Gamma^*(E) \sim J_0{}^2(eV/h\nu)\, \Gamma(E) \qquad\qquad (1)$$

where $J_0$ is the Bessel function, V is the amplitude of the ac signal, h is Planck's contact, $\nu$ is frequency of the microwave radiation and $\Gamma(E)$ is the tunnelling rate in the absence of microwave radiation.

There can be several combination of frequencies v and amplitudes V for which $\Gamma = 0$. In general, for long pulse times, the electron 42 can be seen as oscillating from one side of the tunnel barrier 23 to the other, so that, on average, $\Gamma = 0$.

In order to manipulate a qubit, the isolated double quantum dot system 4 can be operated near a degenerate state where charge is transferred between the two quantum dots $22_1$, $22_2$. The difference in energy level $E_1$_$E_2$ can bet set by gate voltages.

The microwave frequency can be chosen so that microwaves pump one electron from the second dot $22_2$ with energy $E_2$ to the first dot $22_1$ with energy $E_1$. In the absence of microwave radiation, the electron 42 can tunnel directly from the first dot $22_1$ to the second dot $22_2$ because $E_1$_ $E_2 > 0$ at a first rate. By applying microwave radiation and by adjusting the frequency and power of the microwave radiation, it is possible to counteract this tunnelling process such that the electron 42 becomes delocalized across the two dots $22_1$, $22_2$ thereby forming a superposition of states $E_1$, $E_2$.

Microwave pulses having a pulse duration $\Delta t$ can be used to perform a transformation, such as a Hadamard transformation, $U_H$. The pulse duration is adjusted according to the tunnelling time through the barrier 23. Typically, the pulse duration $\Delta t$ is of the order of few nanoseconds to few 100 microseconds depending on bias conditions, doping and device dimensions.

The microwaves may have a power lying in the ranged between about - 140 dBm to about +10 dBm. The power can be found by routine experiment. Generally, a power is selected which is sufficiently high to perform the transformation, but which is not so high as to heat the device 2.

*Ac to dc rectification*

Microwave radiation can be used to induce a dc offset in the gates 5.

A gate electrode 5 can convert an ac microwave signal into a dc voltage signal and, thus, apply a dc electric field to the isolated double quantum dot system 5. This is a wireless arrangement, i.e. the gate 5 need not be and is not connected by a lead, for example, in the form of a semiconductor or metallic track.

Figure 6 shows a gate electrode 5 formed from highly-doped, n-type silicon. The gate 5 includes an inner, core region of material 46 and an outer, edge region of material 47.

As shown in Figure 6, if an external bias, $V_1$, is applied to the gate 5, then the potential is substantially equal throughout the core region 46, but there is potential drop across the edge region 47. The drop is due to differences in doping density and surface effects. For example, the edge region may be depleted due to an interface with $SiO_2$. Thus, in the core region 46, the potential is $V_1$, but at the tip 48 of the gate 5 the potential is $V_1 - \Delta$.

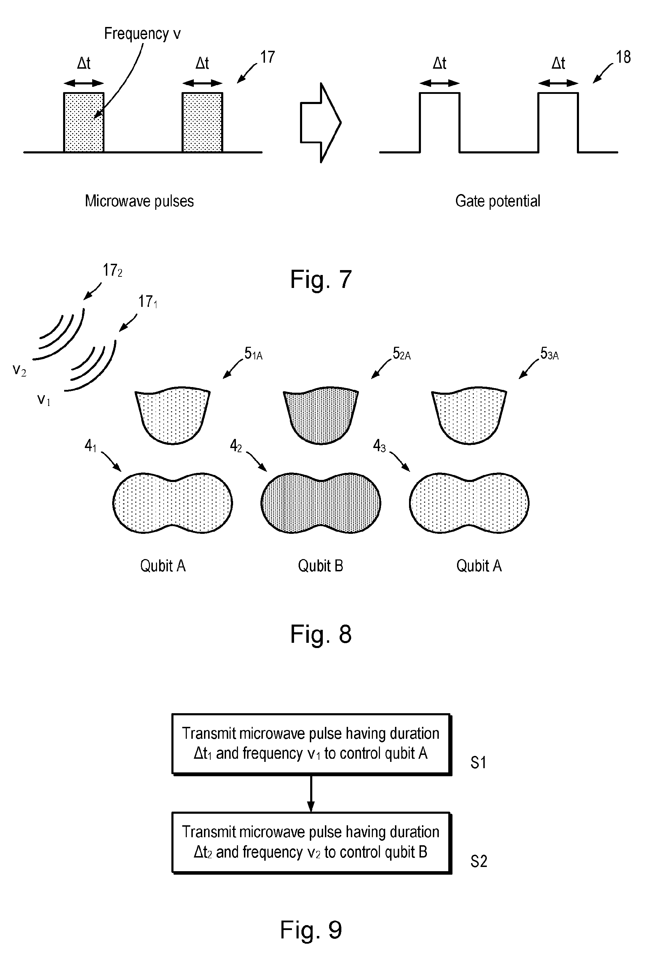

Referring also to Figure 7, if the lead 5 is left floating and is exposed to microwave radiation 17, then the gate 5 converts the ac microwave pulses 18 into a dc voltage pulses 18.

The dc bias is proportional to the gradient of charge carrier (and thus impurity) concentration, $V.n$.

It is possible to engineer the shape and doping of the gate 5 so as to increase the effect by, for example, having thin tip gate. A larger gradient, $V.n$, tends to produce a larger effect. For example, the gradient may be of the order of $10^{10}$ cm$^{-2}$, $10^{11}$ cm$^{-2}$ or $10^{12}$ cm$^{-2}$.

If a set of gate voltages, for example $V_{G1}$ and $V_{C1}$ applied to third and second gates $5_3$, $5_2$ respectively define a $|0\rangle$ state of a qubit and $V_{G2}$, $V_{C2}$ define a $|1\rangle$ state, then it is possible to find a frequency and a power inducing a gate offset of $V_{G2}$_$V_{G1}$ and $V_{C2}$_$V_{C1}$. In this case, sending a pulse of microwaves is equivalent to applying a gate pulse.

Leadless control of gates can be employed with other types of device and is not limited to quantum information processing devices.

*Qubit addressing*

Referring to Figures 8 and 9, a multiple isolated quantum dot system $5_1$ is shown comprising first, second and third isolated quantum dot systems $4_1$, $4_2$, $4_3$ providing first, second and third charge qubits and having corresponding control gates $5_1$, $5_2$ and $5_3$.

The gates and qubits (i.e. isolated quantum dot systems) can be tuned using different doping concentrations, choice and quality of materials (e.g. the quality of oxide) and structure (including structure of interfaces).

Qubits within the multiple isolated quantum dot system 51 can be addressed by frequency multiplexing. For example, a first frequency $\nu_1$ can be used to addressing the first and third qubits (step S1) and a second frequency $\nu_2$ can be used to address the second qubit (step S2).

Microwaves having the first and second frequencies $\nu_1$, $\nu_2$ can be transmitted separately. Signals and/or microwaves having the first and second frequencies $\nu_1$, $\nu_2$ can be mixed and transmitted simultaneously.

It will be appreciated that more than two frequencies can be used.

*Modifications*

It will be appreciated that many modifications may be made to the embodiments hereinbefore described.

The quantum information processing device need not be based on a charge qubit, but be based on a spin qubit, such as two phosphorus atoms.

Semiconductors other can silicon can be used, such a silicon-germanium and germanium.

If silicon is used, silicon need not be doped with phosphorous, but can be doped with other donors, such as arsenic (As), or acceptors, such as boron (B). The doping concentration can be varied.

Different dopants (i.e. impurities) can be used in different parts of the device. For example, one impurity can be used for the isolated quantum dot system, another impurity can be used the electrometer and/or yet another impurity can be used for the gates. This can introduce selectivity whereby the microwaves act on (or have a greater effect on) one part of the device, such as the gates, than another part of the device, such as electrometer and so help to minimise interference, for example, with the operation of the electrometer.

**Claims**

1. A method comprising:

   applying a set of microwave pulses to a quantum information processing device comprising at least one qubit formed in a semiconductor region, the microwave pulse(s) having a frequency of between 5 GHz and 20 GHz.

2. A method according to claim 1, wherein the microwave pulse(s) have a frequency of between 10 GHz and 15 GHz.

3. A method according to claim 1 or 2, wherein the at least one qubit is a charge qubit.

4. A method according to any preceding claim, wherein the semiconductor region comprises silicon.

5. A method according to any preceding claim, wherein the quantum information processing device comprises at least one gate electrode comprising a semiconductor material.

6. A method according to claim 5, wherein the semiconductor material is silicon.

7. A method according to claim 5 or 6, wherein the gate electrode has an edge, a core region and an edge region disposed between the core region and the edge and wherein concentration of impurities across the edge region has a non-zero gradient.

8. A method according to claim 5, 6 or 7, wherein the gradient is greater than $10^{10}$ cm$^{-2}$.

9. A method according to any preceding claim, wherein the set of microwave pulses comprises a single pulse.

10. A method according to any preceding claim, wherein the pulse(s) have a duration between about 10 ns and 100 $\mu$s.

11. A method according to any preceding claim, comprising:

    applying a first set of microwave pulses having a first frequency in a range between 10 GHz and 15 GHz; and
    applying a second set of microwave pulses having a second, different frequency in a range between 10 GHz and 15 GHz.

12. A method according to claim 11, wherein the first and second sets of microwave pulses are applied at different times.

13. A method according to claim 11 or 12, wherein the first and second sets of microwave pulses are applied at the same time.

14. Apparatus comprising:

    a quantum information processing device comprising at least one qubit formed in a semiconductor region; and
    a microwave emitter coupled to a microwave source configured to emit microwaves having a frequency of between 5 GHz and 20 GHz.

15. Apparatus according to claim 14, further comprising:

at least one gate electrode comprising semiconductor material, the at least one gate electrode not having a wired connection to external circuitry.

Fig. 1

Fig. 1a

Fig. 2

Fig. 3

Fig. 4

Fig. 4a

$22_1$     23     $22_2$

$E_1$  $41_1$     42     45  44  $\sim$ v

43     $41_2$  $E_2$

42

## Fig. 5

Potential

$V_1$

$V_1-\Delta$

Distance

5

46     V     48

47

## Fig. 6

Frequency v

Δt    Δt    17    ⟹    Δt    Δt    18

Microwave pulses    Gate potential

## Fig. 7

17₂
17₁
v₂
v₁

5₁ₐ    5₂ₐ    5₃ₐ

4₁    4₂    4₃

Qubit A    Qubit B    Qubit A

## Fig. 8

| Transmit microwave pulse having duration Δt₁ and frequency v₁ to control qubit A | S1 |

↓

| Transmit microwave pulse having duration Δt₂ and frequency v₂ to control qubit B | S2 |

## Fig. 9

# EP 2 562 694 A1

Europäisches
Patentamt

European
Patent Office

Office européen
des brevets

## EUROPEAN SEARCH REPORT

Application Number

EP 11 17 8314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 310 910 A1 (SUTER DIETER PROF DR [DE]) 14 May 2003 (2003-05-14)<br>* paragraph [0022] *<br>* paragraph [0046] - paragraph [0056] *<br>* paragraph [0062] - paragraph [0068] *<br>* paragraph [0075] *<br>* paragraph [0088] *<br>* paragraph [0096] - paragraph [0108] *<br>* claims 1-4 * | 1-15 | INV.<br>G06N99/00<br><br>ADD.<br>H01L31/00 |
| X | WO 2009/100483 A1 (QUCOR PTY LTD [AU]; MORELLO ANDREA [AU]; DZURAK ANDREW STEVEN [AU]; HU) 20 August 2009 (2009-08-20)<br>* the whole document * | 1-15 | |
| X | US 2005/062072 A1 (YAMAMOTO TSUYOSHI [JP] ET AL) 24 March 2005 (2005-03-24)<br>* the whole document * | 1-15 | |
| X | US 7 655 850 B1 (AHN DOYEOL [KR]) 2 February 2010 (2010-02-02)<br>* the whole document * | 1-15 | TECHNICAL FIELDS SEARCHED (IPC) |
| X<br>A | EP 2 075 745 A1 (HITACHI LTD [JP]) 1 July 2009 (2009-07-01)<br>* paragraph [0020] *<br>* paragraph [0125] *<br>* figure 12 * | 1<br>2-15 | G06N<br>H01L |

The present search report has been drawn up for all claims

| Place of search | Date of completion of the search | Examiner |
|---|---|---|
| The Hague | 14 December 2011 | Schenkels, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

**ANNEX TO THE EUROPEAN SEARCH REPORT
ON EUROPEAN PATENT APPLICATION NO.**                    EP 11 17 8314

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2011

| Patent document cited in search report | | Publication date | Patent family member(s) | | Publication date |
|---|---|---|---|---|---|
| EP 1310910 | A1 | 14-05-2003 | NONE | | |
| WO 2009100483 | A1 | 20-08-2009 | AU | 2009214818 A1 | 20-08-2009 |
| | | | CN | 101965631 A | 02-02-2011 |
| | | | EP | 2248157 A1 | 10-11-2010 |
| | | | JP | 2011512525 A | 21-04-2011 |
| | | | US | 2011121895 A1 | 26-05-2011 |
| | | | WO | 2009100483 A1 | 20-08-2009 |
| US 2005062072 | A1 | 24-03-2005 | JP | 4535701 B2 | 01-09-2010 |
| | | | JP | 2005057068 A | 03-03-2005 |
| | | | US | 2005062072 A1 | 24-03-2005 |
| US 7655850 | B1 | 02-02-2010 | NONE | | |
| EP 2075745 | A1 | 01-07-2009 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. E. KANE.** A silicon-based nuclear spin quantum computer. *Nature,* 1998, vol. 393, 133-137
- **G. MORLEY.** The initialization and manipulation of quantum information stored in silicon by bismuth dopants. *Nature Materials,* 2010, vol. 9, 725
- **J. GORMAN et al.** Charge-Qubit Operation of an Isolated Double Quantum Dot. *Physical Review Letters,* 2005, vol. 95, 090502
- **R-B LIU et al.** Quantum computing by optical control of electron spins. *Advances in Physics,* 2010, vol. 59, 703-802
- **S. J. SHIN et al.** Room-Temperature Charge Stability Modulated by Quantum Effects in a Nanoscale Silicon Island. *Nano Letters,* 2001, vol. 11, 1591-1597
- **T. FERRUS et al.** Cryogenic instrumentation for fast current measurement in a silicon single electron transistor. *Journal Of Applied Physics,* 2009, vol. 106, 033705
- **T. FERRUS et al.** Electron dynamics in a non-metallic silicon isolated double quantum dot capacitively coupled to a single electron transistor. *Electron dynamics in a non-metallic silicon isolated double quantum dot capacitively coupled to a single electron transistor,* 2011, vol. arXiv, 0907-2635